# EUROPEAN PATENT SPECIFICATION

(11) **EP 3 606 358 B1**
(45) Date of publication and mention of the grant of the patent: **26.01.2022**
(21) Application number: 18795041.5
(22) Date of filing: 02.05.2018
(51) Int. Cl.: A23L 7/109, A23P 20/10, A23P 30/10

(54) **PROCESS OF PREPARING A MOLDED 3-DIMENSIONAL SELF-CONTAINED SINGLE SERVING PASTA FOOD PRODUCT**
VERFAHREN ZUR HERSTELLUNG EINES GEGOSSENEN 3-DIMENSIONALEN IN SICH GESCHLOSSENEN EINZELPORTION-TEIGWARENPRODUKTS
PROCÉDÉ DE PRÉPARATION D'UN PRODUIT ALIMENTAIRE À BASE DE PÂTES EN PORTION INDIVIDUELLE AUTONOME MOULÉ TRIDIMENSIONNEL

(30) Priority: 03.05.2017 US 201762500523 P; 03.05.2017 US 201762500525 P; 03.05.2017 US 201762500538 P; 30.11.2017 US 201762593028 P
(43) Date of publication of application: 12.02.2020
(73) Proprietor: Fiorentino, Luigi, Brooklyn, NY 11201 (US)
(72) Inventor: Fiorentino, Luigi, Brooklyn, NY 11201 (US)
(74) Representative: Pes, Matteo
(86) International application number: PCT/US2018/030611
(87) International publication number: WO 2018/204473

(56) References cited:
- JP-A- 2007 306 833
- JP-B2- 4 745 996
- KR-A- 20160 058 251
- US-A- 4 693 900
- US-A- 5 063 072
- US-A- 5 137 745
- US-A- 5 283 071
- US-A- 5 492 711
- US-B1- 6 221 408
- MIRHOSSEINI, H et al.: "Effect of partial replacement of corn flour with durian seed flour and pumpkin flour on cooking yield, texture properties, and sensory attributes of gluten free pasta", LWT-Food Science and Technology, vol. 63, no. 1, 1 September 2015 (2015-09-01), pages 184-190, XP055547164,
- "Souffled Macaroni and Cheese", DELIA ONLINE, 31 July 2016 (2016-07-31), pages 1-2, XP055547169, Retrieved from the Internet: URL:https://www.deliaonline.com/recipes/ty pe-of-dish/pasta/souffled-macaroni-cheese [retrieved on 2018-06-21]
- "Spaghetti Doughnuts are here - and you can get your own starting this weekend", FOOD AND WINE, 30 March 2017 (2017-03-30), XP055547219, Retrieved from the Internet: URL:https://www.foodandwine.com/news/spagh etti-donuts-are-here-and-you-can-get-your- own-starting-weekend [retrieved on 2018-06-19]

## Description

This application claims benefit of U.S. Provisional Patent Applications Numbers: 62/593,028, filed November 30, 2017; 62/500,538, May 3, 2017; 62/500,525, filed May 3, 2017; and 62/500,523, filed May 3, 2017.

### BACKGROUND

Pasta is a food item generally made from a dough mixture of flour, derived from grinding hard grains such as wheat, rice or corn, (or flours derived from grinding dehydrated tubers or legumes), water, and (optionally) eggs. In making spaghetti, a very popular form of pasta, the dough is formed into string shaped lengths of varying thickness or diameter, which after being boiled in water, is dressed or garnished with any of the following: a sauce; condiments; oil; spices; seasoning; meat, fish or seafood pieces; cheese, or combinations thereof, thereby resulting in a spaghetti food preparation.

Pasta food preparations are eaten from a plate, bowl or other container. The dressed spaghetti is made up of loosely amassed solids, semisolids and liquids and must be consumed with utensils, forks, spoons, chop sticks or other implements. Pasta is a widely consumed food items worldwide and enjoys mass appeal. A pasta food preparation can be made in various quantities or yields for one or more persons and can be prepared by any average individual, a skilled professional, or produced commercially or industrially and commercially packaged. The practicality of eating a pasta preparation, including portability, is always restricted to either one or more of the following: preparation restrictions and limitations; container availability and ease of transport; utensil requirements and clean up issues.

KR 2016 0058251 discloses a self-containing single serving pasta food product in the form of a hamburger, wherein ramen noodles are mixed with seasoning and coated with alpha waxy corn starch. In particular, a solution of water and waxy corn starch is applied to the ramen noodles in form of a solution to 0.5% - 2.0% by weight, before the noodles are placed in a mold and frozen.

JP 2007 306833 discloses a self-containing single serving pasta food wherein noodles are arranged in the form of a dough and ingredients are arranged on the dough that is impregnated with a binder, and baked or fried in a mold. The binder is chosen between raw materials such as liquid or paste-like starch, protein, and seaweed-derived polysaccharides or beaten egg.

US 6,221,408) discloses a self-containing single serving pasta food product in the form of a pizza-shaped shells, wherein pasta is mixed with seasoning and coated with starch and cellulose derivative, for instance methylcellulose, hydroxypropyl methylcellulose, isopropyl cellulose, hydroxyethyl cellulose and carboxymethyl cellulose. The binder is intended to replace egg whites and is prepared by using a 2% aqueous solution of the cellulose derivative. A 3% or 4% water solution may be preferred when the binder is prepared with a low viscosity gum.

### SUMMARY

The process of preparing the 3-dimensional self-contained single serving pasta food product according to the present disclosure includes molding or forming by various different methods, a pasta, in particular a spaghetti food preparation into a single serving format food product having any number combination of constituent pieces and/or accompaniments resulting in a self-contained 3-dimensional single serving format. This format allows a consumer to consume it by themselves under typical circumstances directly from their hand not necessarily requiring a container, vessel or utensils and involves little or no clean up issues as otherwise could not have been achieved by existing spaghetti food preparation.

The invention is defined by the claims.

### BRIEF DESCRIPTION OF THE DRAWINGS

The following detailed description of the preferred embodiment of the present invention will be better understood when read in conjunction with the appended drawings. For the purpose of illustrating the invention, there are shown in the drawings embodiments which are presently preferred. It is understood, however, that the invention is not limited to the precise arrangements and instrumentalities shown. In the drawings:
Fig. 1 is an isometric view of the pasta food product of the present process;
Fig. 2 is a section view of the pasta food product of Fig. 1; and
Fig. 3 is a flow diagram of the process.

### DETAILED DESCRIPTION OF THE PREFERRED EMBODIMENTS

Noodles of any length, diameter or thickness, in dried format with a water activity (aw) in a range between 0.4 to 0.6, preferably 0.5, are used. Water activity (aw) being defined as the partial vapor pressure of water in a substance divided by the standard state partial vapor pressure of water. In the field of food science, the standard state is most often defined as the partial vapor pressure of pure water at the same temperature. The preferred type of noodle is commercially produced pasta or dry spaghetti noodles made from durum wheat semolina having a preferred thickness diameter range of approximately 0.8mm to 1.7mm and a preferred length of 25 to 40cm and even more preferably at least 15cm in length. It should be noted however, that pasta having other shapes, diameters, and lengths can also be used, e.g. acini, alphabet, anelli, bigoli, ditalini, farfalline, orso, pici, spaghettini, stelline, etc. It has been discovered that pasta having a surface curvature is required in order to obtain the necessary surface adhesion or binding qualities.

The dry noodles are heated in an aqueous solution, preferably water and more preferably demineralized water, purified water, or water treated by a reverse osmosis system, to a temperature between approximately 83 degrees Celsius and 105 degrees Celsius. In the heating and hydration step 10, a quantity of water that is preferably 300% to 400% of the specific weight to that of the dry noodles, is brought to a rolling boil.

The heated and hydrated noodles 5 should be prepared to an adequate texture in which they are hydrated to between 45% to 50% of their specific weight in order to achieve a desired starch release on the surface of the noodles and to create an adequate binding surface of the noodles in the subsequent process steps. It has been discovered that beyond this range too much starch is released from the protein matrix of the noodle 5. Moreover, in addition to too much starch being released, when hydrated beyond the above range, release of diffused starch only on the outer surface cannot be maintained, which would ruin the plasticization bond discussed below. At the time of the of starch release, which occurred in the heating and hydration of the noodle, the heated and hydrated noodles 5 are completely removed from the aqueous solution in which the noodle was heated, and the aqueous solution (*i*.*e*., starch containing water) should be set aside for a subsequent process step.

The noodles are then be placed in a second, cool aqueous solution, preferably water and more preferably demineralized water, purified water, or water treated by a reverse osmosis system, having a temperature range from 20 degrees Celsius to no more than 40 degrees Celsius in a cooling step 20, in order to quickly lower the noodle temperature below 83 degrees Celsius to halt further release of starch from the noodle protein matrix and to maintain the surface starch released in the heating and hydration process while preventing retrogradation of the surface starch back into the noodle or to detach from the noodle surface which occurs as temperatures decrease. This desired state now obtained by the starch released on the outer surface of the noodle creates an ideal physical and structural inner noodle state and an ideal physical property state of the outer noodle (stabilized heated and hydrated noodle) which is critical in the subsequent process steps.

An edible garnishing or accompaniment can be optionally added to the noodles in a subsequent step 40. Exemplary edible garnishing or accompaniments can be prepared by including any combination of the following constituents: a prepared sauce; vegetables; legumes; condiments; plant derived oils; salt; spices; seasoning; meat; fish or seafood pieces; and cheese. One of ordinary skill in the art would readily recognize that the edible garnishing or accompaniment is not limited to the foregoing constituents, and can include other constituents depending on the desired flavor. The various derivative of flavors and/or recipe mixtures can result in a variety of prepared yield options for the resulting. The resulting edible garnishing mixture preferably contains a water activity (aw) in the range between 0.7 aw and 0.98 aw. This garnishing or accompaniment mixture is set aside for subsequent garnishing process steps.

The stabilized heated and hydrated noodle prepared in the previous step 20 is drained from the second aqueous solution and introduced, in a subsequent step 30, to an aqueous solution containing 3% to 7% of starch, which can be the starch containing water previously set aside, which is heated to temperature between 83 degrees and 90 degrees. The starch in the heated starch containing aqueous solution adheres to the suspended state starch on the outer surface of the noodle to create a plasticizing water based film surrounding the noodles which protects the noodles to maintain the desired moisture and consistency desired in the noodle. The plasticized surface wet noodle is set aside for a subsequent process step.

The garnishing or accompaniment is now introduced to an edible amphiphillic binder such as lecithin, preferably obtained from egg yolk 40. Other binders such as soy lecithin and other emulsifiers can also be used. The amphiphillic properties of lecithin attract both water and fatty substances which are the constituents of the garnishing.

The plasticized surface wet noodle set aside in the previous step is now introduced to the garnishing or accompaniment 45 with lecithin, or just a lecithin preparation alone. The amphiphilic properties of lecithin bind to the surface water of the noodle and the garnishing constituents. However, the amphiphilic emulsifying properties of the egg yolk will not be able to drain moisture content from the inner core of the noodle because of the plasticized outer surface achieved.

At this stage of the process, a mixture of foam egg whites having 75% to 95% specific volume to that of the noodles and garnishing are folded into the entire mixture to create a heat activated expanding filling agent in a further step 50.

The entire mixture is placed into food grade molds, preferably food grade silicone, step 60. The molds are all-encompassing closed molds designed to yield a 3-dimensional handheld shape in which the resulting mixture must be filled to less than capacity to permit the mixture containing the egg white foam and resulting mixture to expand to completely fill out the inner cavity upon heating the filled molds in an oven. The mold is preferably round, toroidal or donut-shaped; however, one of skill in the art will readily recognize various mold shapes can be used within the scope of this disclosure. The water loss desired to achieve a desired water activity can be achieved by modulating the heating temperatures and controlling mold venting while being heated, step 60. The shortest heating duration to achieve the required internal temperature, dependent on local food safety guidelines, is preferred.

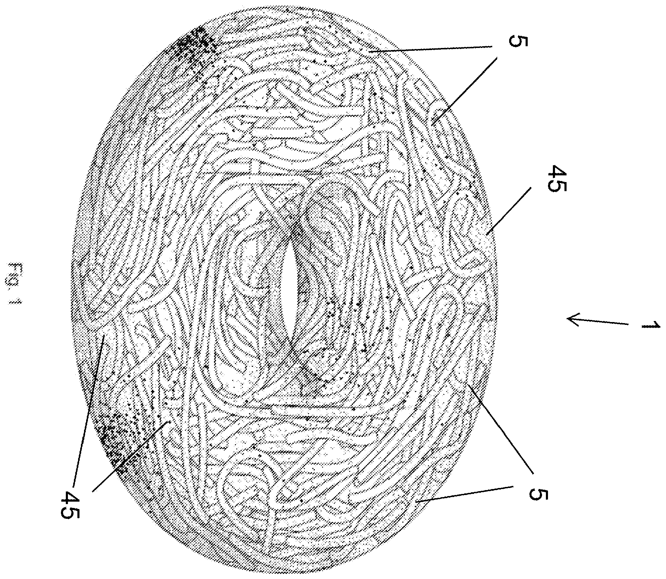

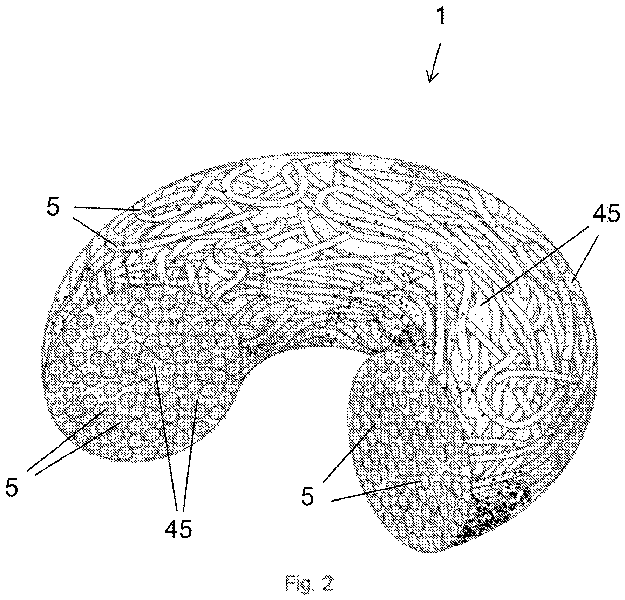

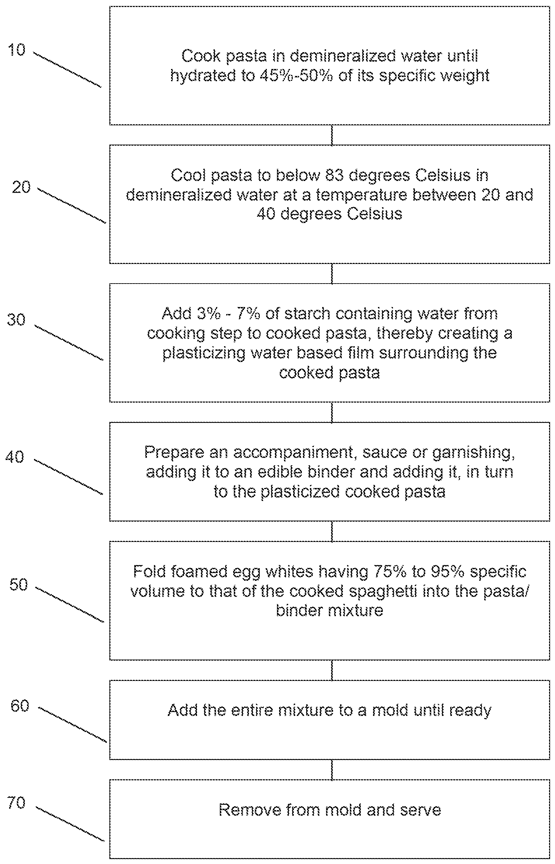

The heating duration of the mixture will be determined on various factors dependent on the garnishing type and on standardized food safety norms. After heating, the mixture is removed from the mold, step 70, and the resulting process yields a hand-held noodle based product in a 3-dimensional form. The resulting noodle based food product 1, as depicted in Fig. 1, is sufficiently dried and has a desirable water activity (a_{w}) such that it can used or consumed in a hand held fashion without fracturing apart or leaving behind a mess of fractured components in a user or consumer's hands. As shown in the section view of Fig. 2, the noodles 5 are maintained in position by the garnishing or accompaniment and the binder material 45.

After removing the resulting noodle based food product 1 from the mold, one or more of the following procedures can optionally be implemented for serving or preservation: subsequent heat exposure resulting in browning; baking; frying; open flame exposure; drying; vacuum packing; smoking; flash freezing; freezing to below -8 degrees Celsius to prevent starch retrogradation.

The molded noodle based food product 1 in single serving format can be produced in a single or high volume continuous batch quantity fashion via a combined or unique method of the following: manual, mechanized, commercial or industrial manner.

In an alternate embodiment not according to the claimed invention, a stick, or similar type insertable item or element is introduced into the moldable pasta preparation either prior to or post molding. The stick, or similar type insertable item introduced to the molded pasta preparation can be made of a food grade material that has a shape profile which provides a handle for a consumer to grasp the moldable pasta preparation, thereby facilitating consumption.

## Claims

1. A process for preparing a self-contained single serving pasta food product (1) comprising:
cooking a predetermined amount of pasta until hydrated to 45%-50% of its specific weight (10);
cooling the pasta to below 83 degrees Celsius in water at a temperature between 20 and 40 degrees Celsius (20);
creating a plasticizing water-based film surrounding the cooked pasta (30);
adding an accompaniment to the pasta to create a mixture (40); adding the mixture to a mold (60);
heating the molded mixture (60); and
removing the heated molded mixture from the mold (70),
**characterized in that**
the plasticizing water-based film is created by adding 3% - 7% of starch containing water from the cooking step to the cooked pasta, and **in that**
egg whites having 75% to 95% specific volume to that of the cooked pasta are folded into the mixture prior to adding the mixture to the mold.

2. The process of claim 1, wherein the accompaniment comprises an edible binder.

3. The process of claim 2, wherein the edible binder comprises lecithin.

4. The process of claim 1, wherein the accompaniment comprises an amphiphilic edible binder.

5. The process of claim 1, wherein the pasta is a type of pasta selected from the group consisting of: acini, alphabet, anelli, bigoli, ditalini, farfalline, orso, pici, spaghetti, spaghettini, stelline and combinations thereof.

6. The process of claim 1, wherein the self-contained pasta food product (1) is further processed by: baking; frying; open flame exposure; drying; vacuum packing; smoking; or flash freezing.

7. The process of claim 1, wherein the mold is round, toroidal or donut-shaped.

8. The process of claim 1, wherein the heated molded mixture is round, toroidal or donut-shaped.

9. A self-contained single serving pasta food product (1) made by the process of claim 1.

## Patentansprüche

1. Verfahren zur Herstellung eines, in sich geschlossenen Einzelportion-Nahrungsmittelprodukts (1) aus Teigwaren, umfassend:
Kochen einer vorbestimmten Menge von Teigwaren, bis sie auf 45%-50% ihres spezifischen Gewichts hydratisiert ist (10);
Abkühlen der Teigwaren auf unter 83 Grad Celsius in Wasser mit einer Temperatur zwischen 20 und 40 Grad Celsius (20);
Erzeugen eines plastifizierenden Films auf Wasserbasis, der die gekochten Teigwaren umgibt (30);
Zugeben einer Beilage zu den Teigwaren, um eine Mischung (40) herzustellen; Zugeben der Mischung in eine Form (60);
Erhitzen der geformten Mischung (60); und
Entfernen der erhitzten geformten Mischung aus der Form (70),
**dadurch gekennzeichnet, dass**
der plastifizierende Film auf Wasserbasis durch Zugabe von 3 % bis 7 % stärkehaltigem Wasser aus dem Kochschritt zu den gekochten Teigwaren erzeugt wird, und dass
Eiklar mit einem spezifischen Volumen von 75 % bis 95 % des Volumens der gekochten Teigwaren in die Mischung eingearbeitet wird, bevor die Mischung in die Form eingebracht wird.

2. Verfahren nach Anspruch 1, wobei die Beilage ein essbares Bindemittel enthält.

3. Verfahren nach Anspruch 2, wobei das essbare Bindemittel Lecithin umfasst.

4. Verfahren nach Anspruch 1, wobei die Beilage ein amphiphiles essbares Bindemittel umfasst.

5. Verfahren nach Anspruch 1, wobei die Teigwaren eine Art von Pasta sind, ausgewählt aus der Gruppe bestehend aus: acini, alphabet, anelli, bigoli, ditalini, farfalline, orso, pici, spaghetti, spaghettini, stelline und Kombinationen davon.

6. Verfahren nach Anspruch 1, wobei das in sich geschlossene Teigwaren-Nahrungsmittelprodukt (1) weiterverarbeitet wird durch: Backen; Frittieren; Aussetzen einer offenen Flamme; Trocknen; Vakuumverpacken; Räuchern; oder Schockfrosten.

7. Verfahren nach Anspruch 1, wobei die Form rund, toroidal oder Donut-förmig ist.

8. Verfahren nach Anspruch 1, wobei die erhitzte geformte Mischung rund, toroidal oder Donut-förmig ist.

9. Ein in sich geschlossenes Einzelportions-Nahrungsmittelprodukt (1) aus Teigwaren, hergestellt nach dem Verfahren des Anspruchs 1.

## Revendications

1. Un procédé de préparation d'un produit alimentaire autonome à base de pâtes en portion individuelle (1) comprenant:
cuire une quantité prédéterminée de pâtes jusqu'à ce qu'elles soient hydratées à 45%-50% de leur poids spécifique (10);
refroidir les pâtes en dessous de 83 degrés Celsius dans de l'eau à une température comprise entre 20 et 40 degrés Celsius (20);
créer un fil plastifiant à base d'eau entourant les pâtes cuites (30);
ajouter un accompagnement aux pâtes pour créer un mélange (40); ajouter le mélange dans un moule (60);
chauffer le mélange moulé (60); et
retirer le mélange moulé chauffé du moule (70),
**caractérisé en ce que**
le film plastifiant à base d'eau est créé en ajoutant 3% - 7% d'amidon contenant de l'eau de l'étape de cuisson aux pâtes cuites, et **en ce que**
des blancs d'œufs ayant de 75% à 95% de volume spécifique par rapport à celui des pâtes cuites sont incorporés au mélange avant d'ajouter le mélange dans le moule.

2. Le procédé selon la revendication 1, dans lequel l'accompagnement comprend un liant comestible.

3. Le procédé selon la revendication 2, dans lequel le liant comestible comprend lécithine.

4. Le procédé selon la revendication 1, dans lequel l'accompagnement comprend un liant comestible amphiphile.

5. Le procédé selon la revendication 1, dans lequel les pâtes sont un type de pâtes sélectionnées parmi le groupe constitué de: acinis, pâtes alphabet, anellis, bigolis, ditalinis, farfallines, orzos, picis, spaghettis, spaghettinis, stellines et des combinaisons de celles-ci.

6. Le procédé selon la revendication 1, dans lequel le produit alimentaire autonome à base de pâtes (1) est en outre traité par: cuisson; friture; exposition à une flamme nue; séchage; emballage sous vide; fumée; ou surgélation soudaine.

7. Le procédé selon la revendication 1, dans lequel le moule est rond, toroïdal ou en forme beignet.

8. Le procédé selon la revendication 1, dans lequel le mélange moulé chauffé est rond, toroïdal ou en forme beignet.

9. Un produit alimentaire autonome à base de pâtes en portion individuelle (1) réalisé par le procédé de la revendication 1.
